# FASCICULE DE BREVET EUROPEEN

(11) **EP 4 228 484 B1**
(45) Date de publication et mention de la délivrance du brevet: **18.09.2024**
(21) Numéro de dépôt: 21793904.0
(22) Date de dépôt: 14.10.2021
(51) Int. Cl.: A47J 37/12

(54) **CUVE DE FRITEUSE, ET FRITEUSE ELECTRIQUE COMPORTANT UNE TELLE CUVE**
FRITIERBEHÄLTER UND ELEKTRISCHES FRITIERGERÄT MIT EINEM SOLCHEN FRITIERBEHÄLTER
FRYER VESSEL AND ELECTRIC FRYER COMPRISING SUCH A VESSEL

(30) Priorité: 15.10.2020 FR 2010581
(43) Date de publication de la demande: 23.08.2023
(73) Titulaire: SEB S.A., 69130 Ecully (FR)
(72) Inventeur: SCHWARTZ, Delphine, 21000 DIJON (FR); PAIN, Frédéric, 21490 VAROIS-ET-CHAIGNOT (FR)
(74) Mandataire: SEB Développement
(86) Numéro de dépôt international: PCT/EP2021/078387
(87) Numéro de publication internationale: WO 2022/079140

(56) Documents cités:
- FR-A1- 2 788 213
- FR-A1- 2 794 959
- KR-U- 19980 021 426
- US-B1- 6 677 556

## Description

La présente invention concerne le domaine technique des friteuses pour préparer des aliments frits dans un bain de friture. Le bain de friture peut être un bain d'huile ou un bain de matière grasse fondue.

La présente invention concerne plus particulièrement une cuve de friteuse utilisée pour contenir le bain de friture et les aliments à frire.

La présente invention concerne également une friteuse électrique comportant une telle cuve.

La présente invention concerne notamment, mais non exclusivement, une friteuse électrique comportant un dispositif de chauffage électrique à immersion prévu pour être immergé dans le bain de friture contenu dans la cuve, ou un dispositif de chauffage électrique par induction prévu pour chauffer la cuve par induction. Le document FR 2794959 A1 décrit une cuve de friteuse.

Pour les cuves de friteuses réalisées en matériau métallique embouti il a été observé des phénomènes de déformation brusque des parois latérales. Ces phénomènes sont dus à l'amplitude thermique importante du bain de friture, à la dilatation thermique du matériau métallique ainsi qu'au relâchement des contraintes générées lors de l'opération d'emboutissage. Ces phénomènes peuvent générer des bruits anxiogènes tels que des claquements, voire des projections d'huile. Ces phénomènes sont particulièrement gênants lorsque la cuve de friteuse est utilisée sans couvercle durant la cuisson, notamment lorsque les aliments chargés en huile sont disposés dans le panier au-dessus du bain de friture.

Un objet de la présente invention est de limiter les déformations brusques d'une cuve de friteuse réalisée en matériau métallique embouti.

Ces objets sont atteints avec une cuve de friteuse réalisée en matériau métallique embouti, présentant un fond et plusieurs côtés raccordés au fond par des arrondis, au moins un des côtés présentant au moins un embouti latéral de rigidification formant un renfoncement latéral s'étendant dans une direction, du fait que ledit au moins un des côtés présente au moins un autre embouti latéral de rigidification formant un autre renfoncement latéral s'étendant dans une autre direction, et que ledit au moins un embouti latéral de rigidification croise ledit au moins un autre embouti latéral de rigidification. En d'autres termes, ledit embouti latéral de rigidification s'étend de part et d'autre dudit autre embouti latéral de rigidification, et ledit autre embouti latéral de rigidification s'étend de part et d'autre dudit embouti latéral de rigidification. Ces dispositions permettent d'améliorer la rigidité dudit côté et de limiter les phénomènes de déformation brusque.

Ledit au moins un embouti latéral de rigidification et ledit au moins un autre embouti latéral de rigidification peuvent s'étendre vers l'intérieur de la cuve de friteuse. Il est en effet plus facile de réaliser des emboutis vers l'intérieur de la cuve que vers l'extérieur de la cuve.

Ledit au moins un embouti latéral de rigidification et ledit au moins un autre embouti latéral de rigidification peuvent s'étendre exclusivement sur les côtés. Chaque surface emboutie permet de contrarier la propagation de la déformation. Ledit au moins un embouti latéral de rigidification et ledit au moins un autre embouti latéral de rigidification peuvent être entourés par des parties non embouties des côtés. En effet la rigidité est apportée par les croisillons, c'est-à-dire par les croisements entre un embouti latéral de rigidification et un autre embouti latéral de rigidification.

La direction et l'autre direction peuvent présenter un angle compris entre 60° et 120°, et de préférence compris entre 80° et 100°.

La direction et l'autre direction peuvent notamment être perpendiculaires. L'autre direction peut s'étendre parallèlement par rapport au fond.

La direction peut s'étendre perpendiculairement par rapport au fond.

Plusieurs côtés, et de préférence tous les côtés, peuvent présenter ledit au moins un embouti latéral de rigidification et ledit au moins un autre embouti latéral de rigidification. Cette disposition permet de réduire plus significativement les phénomènes de claquement ou de déformation brusque lors de la montée en température ou du refroidissement du bain de friture contenu dans la cuve de friteuse.

Tous les côtés peuvent présenter deux autres emboutis latéraux de rigidification s'étendant parallèlement par rapport au fond. Cette disposition contribue à réduire les phénomènes de claquement ou de déformation brusque lors de la montée en température ou du refroidissement du bain de friture contenu dans la cuve de friteuse

La cuve de friteuse peut être parallélépipédique. Les cuves de friteuses parallélépipédiques sont davantage concernées par les phénomènes de claquement ou de déformation brusque lors de la montée en température ou du refroidissement du bain de friture contenu dans la cuve de friteuse que les cuves de friteuses présentant une paroi latérale arrondie voire circulaire.

Deux côtés opposés peuvent présenter deux emboutis latéraux de rigidification s'étendant perpendiculairement par rapport au fond. Cette disposition contribue à réduire les phénomènes de claquement ou de déformation brusque des grands côtés d'une cuve de friteuse parallélépipédique lors de la montée en température ou du refroidissement du bain de friture contenu dans la cuve de friteuse.

Un des deux autres emboutis latéraux de rigidification desdits deux côtés opposés peut présenter une hauteur plus importante entre les emboutis latéraux de rigidification qu'à l'extérieur des emboutis latéraux de rigidification. Cette disposition contribue à réduire encore davantage les phénomènes de claquement ou de déformation brusque des grands côtés d'une cuve de friteuse parallélépipédique lors de la montée en température ou du refroidissement du bain de friture contenu dans la cuve de friteuse.

Le fond peut présenter au moins un embouti inférieur de rigidification formant un renfoncement inférieur s'étendant dans une première direction et au moins un autre embouti inférieur de rigidification formant un autre renfoncement inférieur s'étendant dans une deuxième direction, ledit au moins un embouti inférieur de rigidification croisant ledit au moins un autre embouti inférieur de rigidification. Cette disposition contribue à réduire les phénomènes de claquement ou de déformation brusque du fond d'une cuve de friteuse lors de la montée en température ou du refroidissement du bain de friture contenu dans la cuve de friteuse.

La cuve de friteuse peut être réalisée en acier inoxydable. Ce matériau est d'usage commun pour les cuves de friteuses et présente l'avantage d'une montée en température moins rapide sur les parois de la cuve, ce qui retarde la montée en température de l'huile du fond de la cuve. Toutefois ce matériau présente l'inconvénient d'être plus propice aux phénomènes de déformation brusque lors de la montée en température ou du refroidissement du bain de friture contenu dans la cuve de friteuse que d'autres matériaux tels que notamment l'acier émaillé.

Ces objets sont atteints également avec une friteuse électrique comprenant une cuve de friteuse et un dispositif électrique de chauffe, dans laquelle la cuve de friteuse est conforme à l'une au moins des caractéristiques précitées.

Selon un mode de réalisation, le dispositif électrique de chauffe peut être un dispositif de chauffage électrique à immersion configuré pour être immergé dans un bain de friture contenu dans la cuve de friteuse.

Selon un autre mode de réalisation, le dispositif électrique de chauffe peut être un dispositif de chauffage électrique par induction prévu pour chauffer la cuve de friteuse par induction.

La friteuse électrique peut comporter un boîtier extérieur présentant une ouverture supérieure, la cuve de friteuse étant agencée dans le boîtier extérieur. La cuve de friteuse peut alors comporter un rebord périphérique extérieur, et le boitier extérieur peut alors comporter un bord supérieur, le rebord périphérique extérieur reposant sur le bord supérieur.

L'invention sera mieux comprise à l'étude d'un exemple de réalisation, pris à titre nullement limitatif, illustré dans les figures annexées, dans lesquelles :
- [fig.1] la figure 1 est une vue en perspective et en éclaté d'un exemple de réalisation d'une friteuse électrique comportant une cuve de friteuse selon l'invention,
- [fig.2] la figure 2 est une vue en perspective de dessus de la cuve de friteuse illustrée sur la figure 1,
- [fig.3] la figure 3 est une vue en perspective de dessous de la cuve de friteuse illustrée sur les figures 1 et 2,
- [fig.4] la figure 4 est une vue en perspective de dessus de la cuve de friteuse illustrée sur les figures 1, 2 et 3, montrant une partie du fond de la cuve de friteuse,
- [fig.5] la figure 5 est une vue en perspective de dessus de la cuve de friteuse illustrée sur les figures 1, 2, 3 et 4, montrant le fond de la cuve de friteuse.

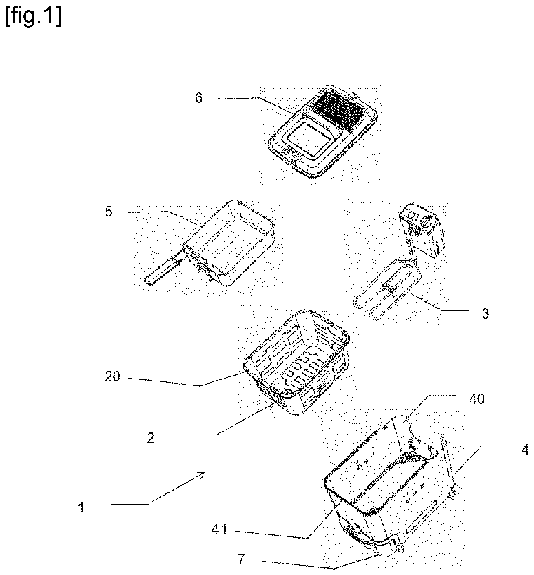

La friteuse électrique 1 illustrée sur la figure 1 comprend une cuve de friteuse 2 et un dispositif électrique de chauffe 3. La cuve de friteuse 2 est configurée pour contenir le bain de friture et les aliments à frire.

Dans l'exemple de réalisation illustré sur la figure 1, le dispositif électrique de chauffe 3 est un dispositif de chauffage électrique à immersion configuré pour être immergé dans le bain de friture contenu dans la cuve de friteuse 2.

A titre de variante, le dispositif électrique de chauffe 3 pourrait notamment être un dispositif de chauffage électrique par induction prévu pour chauffer la cuve de friteuse 2 par induction.

Dans l'exemple de réalisation illustré sur la figure 1, la friteuse électrique 1 comporte un boîtier extérieur 4 présentant une ouverture supérieure 40. Le boîtier extérieur 4 présente un bord supérieur 41 délimitant l'ouverture supérieure 40. Le bord supérieur 41 est plan. La cuve de friteuse 2 est montée amovible par rapport au boîtier extérieur 4. Selon une forme de réalisation préférée, la cuve de friteuse 2 comporte un rebord périphérique extérieur 20. En configuration d'utilisation de la friteuse 1, la cuve de friteuse 2 est agencée dans le boîtier extérieur 4. Le rebord périphérique extérieur 20 repose sur le bord supérieur 41. Dans l'exemple de réalisation illustré sur la figure 1, la friteuse électrique 1 comprend un panier de cuisson 5 et un couvercle 6. Le couvercle 6 peut être utilisé pour la cuisson ou pour le stockage.

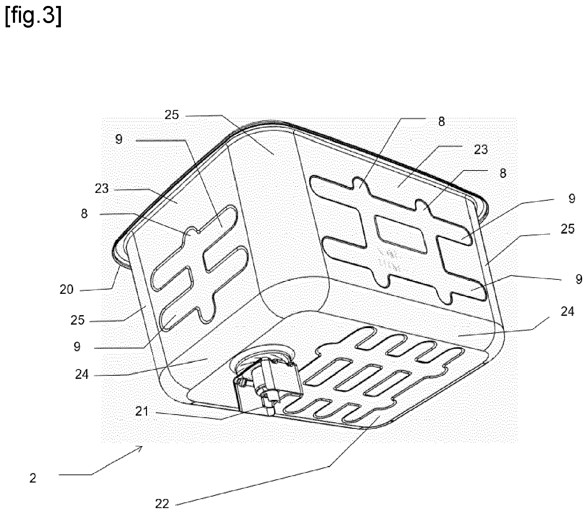

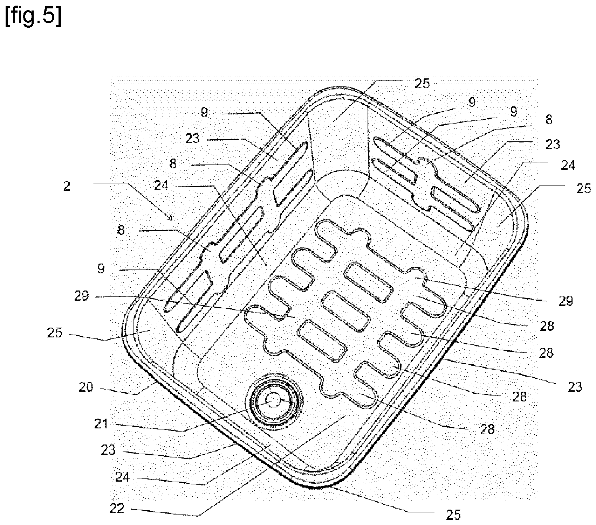

Dans l'exemple de réalisation illustré sur la figure 1, la friteuse électrique 1 comprend un bac de vidange 7 configuré pour recueillir la matière grasse contenue dans la cuve de friteuse 2. A cet effet la cuve de friteuse 2 comporte un dispositif de vidange 21, mieux visible sur les figures 3 et 5.

La cuve de friteuse 2 est réalisée en matériau métallique embouti. La cuve de friteuse 2 peut notamment être réalisée en acier inoxydable. A titre de variante la cuve de friteuse 2 pourrait notamment être réalisée en acier émaillé ou en aluminium.

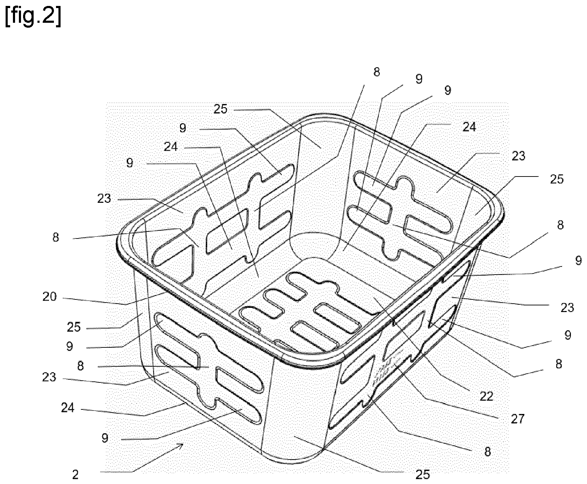

La cuve de friteuse 2 peut comporter des marquages de niveau 27. La cuve de friteuse 2 présente par exemple une épaisseur de l'ordre de 0,6 mm. De préférence la tolérance sur l'épaisseur de la cuve de friteuse 2 est de ± 0,1 mm. Tel que mieux visible sur les figures 2 à 5, la cuve de friteuse 2 présente un fond 22 et plusieurs côtés 23 raccordés au fond 22 par des arrondis 24. Les côtés 23 adjacents sont raccordés entre eux par d'autres arrondis 25.

Dans la cuve de friteuse 2 selon l'invention, au moins un des côtés 23 présente un embouti latéral de rigidification 8 formant un renfoncement latéral s'étendant dans une direction, ainsi qu'un autre embouti latéral de rigidification 9 formant un autre renfoncement latéral s'étendant dans une autre direction, et ledit embouti latéral de rigidification 8 croise ledit autre embouti latéral de rigidification 9.

Les marquages de niveau 27 peuvent s'étendre dans un des emboutis latéraux de rigidification 8 et/ou dans un des autres emboutis latéraux de rigidification 9. Toutefois les marquages de niveau 27 sont réalisés de préférence dans des surfaces planes. Si désiré, les marquages de niveau 27 s'étendent exclusivement dans un des emboutis latéraux de rigidification 8 et/ou dans un des autres emboutis latéraux de rigidification 9.

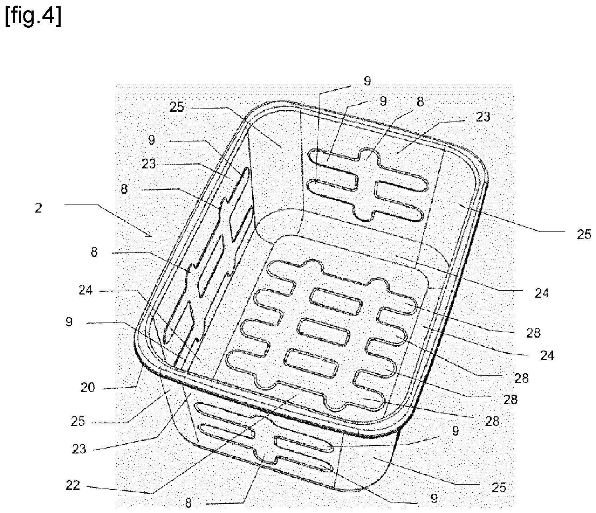

Plus particulièrement dans l'exemple de réalisation illustré sur les figures, tous les côtés 23 présentent au moins un des emboutis latéraux de rigidification 8 et au moins un des autres emboutis latéraux de rigidification 9. Tel que mieux visible sur les figures 4 et 5, tous les emboutis latéraux de rigidification 8 et tous les autres emboutis latéraux de rigidification 9 sont entourés par des parties non embouties des côtés 23.

Plus particulièrement dans l'exemple de réalisation illustré sur les figures, la direction et l'autre direction sont perpendiculaires. La direction s'étend perpendiculairement par rapport au fond 22 et l'autre direction s'étend parallèlement par rapport au fond 22.

Plus particulièrement dans l'exemple de réalisation illustré sur les figures, la cuve de friteuse 2 est parallélépipédique. En d'autres termes, la cuve de friteuse 2 présente quatre côtés 23 opposés deux à deux. En dehors des emboutis latéraux de rigidification 8 et des autres emboutis latéraux de rigidification 9, les côtés 23 peuvent présenter une géométrie plane. Tel que bien visible sur les figures 2 à 5, les emboutis latéraux de rigidification 8 et les autres emboutis latéraux de rigidification 9 s'étendent à l'intérieur de la cuve de friteuse 2. Les emboutis latéraux de rigidification 8 et les autres emboutis latéraux de rigidification 9 s'étendent exclusivement sur les côtés 23.

Plus particulièrement dans l'exemple de réalisation illustré sur les figures, tous les côtés 23 présentent deux autres emboutis latéraux de rigidification 9 s'étendant parallèlement par rapport au fond 22. Les côtés 23 comprennent deux premiers côtés 23 opposés présentant deux emboutis latéraux de rigidification 8 s'étendant perpendiculairement par rapport au fond 22. Un des deux autres emboutis latéraux de rigidification 9 desdits deux côtés opposés 23 présente une hauteur plus importante entre les emboutis latéraux de rigidification 8 qu'à l'extérieur des emboutis latéraux de rigidification 8. Les côtés 23 comprennent deux seconds côtés 23 opposés présentant un seul embouti latéral de rigidification 8 s'étendant perpendiculairement par rapport au fond 22. Sur un même côté les autres emboutis latéraux de rigidification 9 s'étendent perpendiculairement par rapport à l'embouti latéral de rigidification 8 ou aux emboutis latéraux de rigidification 8.

Plus particulièrement dans l'exemple de réalisation illustré sur les figures, le fond 22 présente des emboutis inférieurs de rigidification 28 croisant des autres emboutis inférieurs de rigidification 29. Chacun des emboutis inférieurs de rigidification 28 forme un renfoncement inférieur s'étendant dans une première direction. Chacun des autres emboutis inférieurs de rigidification 29 forme un autre renfoncement inférieur s'étendant dans une deuxième direction. La première direction et la deuxième direction sont perpendiculaires. La première direction et la deuxième direction s'étendent chacune parallèlement ou perpendiculairement par rapport à chacun des côtés. Les emboutis inférieurs de rigidification 28 et les autres emboutis inférieurs de rigidification 29 s'étendent vers l'intérieur de la cuve de friteuse 2. Tel que mieux visible sur les figures 4 et 5, le fond 22 présente quatre emboutis inférieurs de rigidification 28 croisant chacun deux autres emboutis inférieurs de rigidification 29.

A titre de variante, la direction et l'autre direction ne sont pas nécessairement perpendiculaires. La direction et l'autre direction peuvent notamment présenter un angle compris entre 60° et 120°, et de préférence compris entre 80° et 100°. A titre de variante, l'autre direction ne s'étend pas nécessairement parallèlement par rapport au fond 22.

A titre de variante, la direction ne s'étend pas nécessairement perpendiculairement par rapport au fond 22.

A titre de variante, la direction et l'autre direction ne sont pas nécessairement identiques pour tous les côtés 23.

A titre de variante tous les emboutis latéraux de rigidification 8 et tous les autres emboutis latéraux de rigidification 9 ne s'étendent pas nécessairement vers l'intérieur de la cuve de friteuse 2. Au moins un des emboutis latéraux de rigidification 8 et/ou au moins un des autres emboutis latéraux de rigidification 9 peut/peuvent notamment s'étendre vers l'extérieur de la cuve de friteuse 2.

A titre de variante tous les emboutis latéraux de rigidification 8 et tous les autres emboutis latéraux de rigidification 9 ne sont pas nécessairement entourés par des parties non embouties des côtés 23.

A titre de variante, tous les emboutis latéraux de rigidification 8 et tous les autres emboutis latéraux de rigidification 9 ne s'étendent pas nécessairement exclusivement sur les côtés 23. Au moins un des emboutis latéraux de rigidification 8 et/ou au moins un des autres emboutis latéraux de rigidification 9 peut/peuvent notamment atteindre au moins un des arrondis 24 et/ou un des autres arrondis 25.

A titre de variante, tous les côtés 23 ne présentent pas nécessairement au moins un des emboutis latéraux de rigidification 8 et au moins un des autres emboutis latéraux de rigidification 9.

A titre de variante, au moins un des côtés 23 peut présenter au moins un des emboutis latéraux de rigidification 8 et au moins un des autres emboutis latéraux de rigidification 9.

A titre de variante, le fond 22 ne présente pas nécessairement au moins un embouti inférieur de rigidification 28 formant un renfoncement inférieur s'étendant dans une première direction et au moins un autre embouti inférieur de rigidification 29 formant un autre renfoncement inférieur s'étendant dans une deuxième direction, avec ledit au moins un embouti inférieur de rigidification 28 croisant ledit au moins un autre embouti inférieur de rigidification 29.

La cuve de friteuse 2 s'utilise comme une cuve de friteuse traditionnelle. Lors de la montée en température ou du refroidissement du bain de friture contenu dans la cuve de friteuse 2, les emboutis latéraux de rigidification 8 et les autres emboutis latéraux de rigidification 9 permettent de rigidifier les côtés 23 de la cuve de friteuse 2 et d'éviter les phénomènes de claquement ou de déformation brusque des côtés 23 provenant de la dilatation thermique du matériau de la cuve de friteuse 2. Les emboutis inférieurs de rigidification 28 et les autres emboutis inférieurs de rigidification 29 permettent de rigidifier le fond 22 de la cuve de friteuse 2 et d'éviter les phénomènes de claquement ou de déformation brusque du fond 22 provenant de la dilatation thermique du matériau de la cuve de friteuse 2. La sécurité et le confort d'utilisation de la cuve de friteuse 2 sont améliorés. La présente invention n'est nullement limitée à l'exemple de réalisation décrit et à ses variantes, mais englobe de nombreuses modifications, pour autant qu'elles ne sortent pas du cadre des revendications.

## Revendications

1. Cuve de friteuse (2) réalisée en matériau métallique embouti, présentant un fond (22) et plusieurs côtés (23) raccordés au fond (22) par des arrondis (24), au moins un des côtés (23) présentant au moins un embouti latéral de rigidification (8) formant un renfoncement latéral s'étendant dans une direction, **caractérisée en ce que** ledit au moins un des côtés (23) présente au moins un autre embouti latéral de rigidification (9) formant un autre renfoncement latéral s'étendant dans une autre direction, et **en ce que** ledit au moins un embouti latéral de rigidification (8) croise ledit au moins un autre embouti latéral de rigidification (9).

2. Cuve de friteuse (2) selon la revendication 1, **caractérisée en ce que** ledit au moins un embouti latéral de rigidification (8) et ledit au moins un autre embouti latéral de rigidification (9) s'étendent vers l'intérieur de la cuve de friteuse (2).

3. Cuve de friteuse (2) selon l'une des revendications 1 ou 2, **caractérisée en ce que** ledit au moins un embouti latéral de rigidification (8) et ledit au moins un autre embouti latéral de rigidification (9) s'étendent exclusivement sur les côtés (23).

4. Cuve de friteuse (2) selon l'une des revendications 1 à 3, **caractérisée en ce que** ledit au moins un embouti latéral de rigidification (8) et ledit au moins un autre embouti latéral de rigidification (9) sont entourés par des parties non embouties des côtés (23).

5. Cuve de friteuse (2) selon l'une des revendications 1 à 4, **caractérisée en ce que** la direction et l'autre direction présentent un angle compris entre 60° et 120°, et de préférence compris entre 80° et 100°.

6. Cuve de friteuse (2) selon l'une des revendications 1 à 5, **caractérisée en ce que** la direction et l'autre direction sont perpendiculaires.

7. Cuve de friteuse (2) selon l'une des revendications 1 à 6, **caractérisée en ce que** l'autre direction s'étend parallèlement par rapport au fond (22).

8. Cuve de friteuse (2) selon l'une des revendications 1 à 7, **caractérisée en ce que** la direction s'étend perpendiculairement par rapport au fond (22).

9. Cuve de friteuse (2) selon l'une des revendications 1 à 8, **caractérisée en ce que** plusieurs côtés (23) présentent ledit au moins un embouti latéral de rigidification (8) et ledit au moins un autre embouti latéral de rigidification (9).

10. Cuve de friteuse (2) selon l'une des revendications 1 à 9, **caractérisée en ce que** tous les côtés (23) présentent ledit au moins un embouti latéral de rigidification (8) et ledit au moins un autre embouti latéral de rigidification (9).

11. Cuve de friteuse (2) selon l'une des revendications 1 à 10, **caractérisée en ce que** tous les côtés (23) présentent deux autres emboutis latéraux de rigidification (9) s'étendant parallèlement par rapport au fond (22).

12. Cuve de friteuse (2) selon l'une des revendications 1 à 11, **caractérisée en ce qu'**elle est parallélépipédique.

13. Cuve de friteuse (2) selon la revendication 12, **caractérisée en ce que** deux côtés (23) opposés présentent deux emboutis latéraux de rigidification (8) s'étendant perpendiculairement par rapport au fond (22).

14. Cuve de friteuse (2) selon la revendication 13, **caractérisée en ce qu'**un des deux autres emboutis latéraux de rigidification (9) desdits deux côtés (23) opposés présente une hauteur plus importante entre les emboutis latéraux de rigidification (8) qu'à l'extérieur des emboutis latéraux de rigidification (8).

15. Cuve de friteuse (2) selon l'une des revendications 1 à 14, **caractérisée en ce que** le fond (22) présente au moins un embouti inférieur de rigidification (28) formant un renfoncement inférieur s'étendant dans une première direction et au moins un autre embouti inférieur de rigidification (29) formant un autre renfoncement inférieur s'étendant dans une deuxième direction, ledit au moins un embouti inférieur de rigidification (28) croisant ledit au moins un autre embouti inférieur de rigidification (29).

16. Cuve de friteuse (2) selon l'une des revendications 1 à 15, **caractérisée en ce qu'**elle est réalisée en acier inoxydable.

17. Friteuse électrique (1) comprenant une cuve de friteuse (2) et un dispositif électrique de chauffe (3), **caractérisée en ce que** la cuve de friteuse (2) est conforme à l'une des revendications 1 à 16.

18. Friteuse électrique (1) selon la revendication 17, **caractérisée en ce que** le dispositif électrique de chauffe (3) est un dispositif de chauffage électrique à immersion configuré pour être immergé dans un bain de friture contenu dans la cuve de friteuse (2).

19. Friteuse électrique (1) selon la revendication 17, **caractérisée en ce que** le dispositif électrique de chauffe (3) est un dispositif de chauffage électrique par induction prévu pour chauffer la cuve de friteuse (2) par induction.

20. Friteuse électrique (1) selon l'une des revendications 17 à 19, **caractérisée en ce qu'**elle comporte un boîtier extérieur (4) présentant une ouverture supérieure (40) et **en ce que** la cuve de friteuse (2) est agencée dans le boîtier extérieur (4).

21. Friteuse électrique (1) selon la revendication 20, **caractérisée en ce que** la cuve de friteuse (2) comporte un rebord périphérique extérieur (20), **en ce que** le boîtier extérieur (4) comporte un bord supérieur (41), et **en ce que** le rebord périphérique extérieur (20) repose sur le bord supérieur (41).

## Patentansprüche

1. Fritteusenwanne (2), die aus einem tiefgezogenen Metallmaterial ausgeführt ist, die einen Boden (22) und mehrere Seiten (23) aufweist, die mit dem Boden (22) durch Rundungen (24) verbunden sind, wobei mindestens eine der Seiten (23) mindestens eine seitliche Versteifungseinbuchtung (8) aufweist, die eine seitliche Vertiefung bildet, die sich in einer Richtung erstreckt, **dadurch gekennzeichnet, dass** die mindestens eine der Seiten (23) mindestens eine weitere seitliche Versteifungseinbuchtung (9) aufweist, die eine weitere seitliche Vertiefung bildet, die sich in eine andere Richtung erstreckt, und dass die mindestens eine seitliche Versteifungseinbuchtung (8) die mindestens eine weitere seitliche Versteifungseinbuchtung (9) kreuzt.

2. Fritteusenwanne (2) nach Anspruch 1, **dadurch gekennzeichnet, dass** sich die mindestens eine seitliche Versteifungseinbuchtung (8) und die mindestens eine andere seitliche Versteifungseinbuchtung (9) in Richtung des Inneren der Fritteusenwanne (2) erstrecken.

3. Fritteusenwanne (2) nach einem der Ansprüche 1 oder 2, **dadurch gekennzeichnet, dass** sich die mindestens eine seitliche Versteifungseinbuchtung (8) und die mindestens eine andere seitliche Versteifungseinbuchtung (9) ausschließlich an den Seiten (23) erstrecken.

4. Fritteusenwanne (2) nach einem der Ansprüche 1 bis 3, **dadurch gekennzeichnet, dass** die mindestens eine seitliche Versteifungseinbuchtung (8) und die mindestens eine andere seitliche Versteifungseinbuchtung (9) von nicht tiefgezogenen Teilen der Seiten (23) umgeben sind.

5. Fritteusenwanne (2) nach einem der Ansprüche 1 bis 4, **dadurch gekennzeichnet, dass** die eine Richtung und die andere Richtung einen Winkel zwischen 60° und 120° und vorzugsweise zwischen 80° und 100° umfassen.

6. Fritteusenwanne (2) nach einem der Ansprüche 1 bis 5, **dadurch gekennzeichnet, dass** die eine Richtung und die andere Richtung senkrecht zueinander verlaufen.

7. Fritteusenwanne (2) nach einem der Ansprüche 1 bis 6, **dadurch gekennzeichnet, dass** sich die andere Richtung parallel zum Boden (22) erstreckt.

8. Fritteusenwanne (2) nach einem der Ansprüche 1 bis 7, **dadurch gekennzeichnet, dass** sich die Richtung senkrecht zum Boden (22) erstreckt.

9. Fritteusenwanne (2) nach einem der Ansprüche 1 bis 8, **dadurch gekennzeichnet, dass** mehrere Seiten (23) die mindestens eine seitliche Versteifungseinbuchtung (8) und die mindestens eine andere seitliche Versteifungseinbuchtung (9) aufweisen.

10. Fritteusenwanne (2) nach einem der Ansprüche 1 bis 9, **dadurch gekennzeichnet, dass** alle Seiten (23) die mindestens eine seitliche Versteifungseinbuchtung (8) und die mindestens eine andere seitliche Versteifungseinbuchtung (9) aufweisen.

11. Fritteusenwanne (2) nach einem der Ansprüche 1 bis 10, **dadurch gekennzeichnet, dass** alle Seiten (23) zwei andere seitliche Versteifungseinbuchtungen (9) aufweisen, die sich parallel zum Boden (22) erstrecken.

12. Fritteusenwanne (2) nach einem der Ansprüche 1 bis 11, **dadurch gekennzeichnet, dass** sie quaderförmig ist.

13. Fritteusenwanne (2) nach Anspruch 12, **dadurch gekennzeichnet, dass** zwei gegenüberliegende Seiten (23) zwei seitliche Versteifungseinbuchtungen (8) aufweisen, die sich senkrecht zum Boden (22) erstrecken.

14. Fritteusenwanne (2) nach Anspruch 13, **dadurch gekennzeichnet, dass** eine der zwei anderen seitlichen Versteifungseinbuchtungen (9) der zwei gegenüberliegenden Seiten (23) eine größere Höhe zwischen den seitlichen Versteifungseinbuchtungen (8) als außerhalb der seitlichen Versteifungseinbuchtungen (8) aufweist.

15. Fritteusenwanne (2) nach einem der Ansprüche 1 bis 14, **dadurch gekennzeichnet, dass** der Boden (22) mindestens eine untere Versteifungseinbuchtung (28), die eine untere Vertiefung bildet, die sich in einer ersten Richtung erstreckt, und mindestens eine weitere untere Versteifungseinbuchtung (29) aufweist, die eine andere untere Vertiefung bildet, die sich in einer zweiten Richtung erstreckt, wobei die mindestens eine untere Versteifungseinbuchtung (28) die mindestens eine andere untere Versteifungseinbuchtung (29) kreuzt.

16. Fritteusenwanne (2) nach einem der Ansprüche 1 bis 15, **dadurch gekennzeichnet, dass** sie aus rostfreiem Stahl ausgeführt ist.

17. Elektrische Fritteuse (1), umfassend eine Fritteusenwanne (2) und eine elektrische Heizvorrichtung (3), **dadurch gekennzeichnet, dass** die Fritteusenwanne (2) einem der Ansprüche 1 bis 16 entspricht.

18. Elektrische Fritteuse (1) nach Anspruch 17, **dadurch gekennzeichnet, dass** die elektrische Heizvorrichtung (3) eine elektrische Tauchheizvorrichtung ist, die konfiguriert ist, um in ein Frittierbad eingetaucht zu werden, das in der Fritteusenwanne (2) enthalten ist.

19. Elektrische Fritteuse (1) nach Anspruch 17, **dadurch gekennzeichnet, dass** die elektrische Heizvorrichtung (3) eine elektrische Induktionsheizvorrichtung ist, die zum Erhitzen der Fritteusenwanne (2) durch Induktion vorgesehen ist.

20. Elektrische Fritteuse (1) nach einem der Ansprüche 17 bis 19, **dadurch gekennzeichnet, dass** sie ein Außengehäuse (4) umfasst, das eine obere Öffnung (40) aufweist, und dass die Fritteusenwanne (2) in dem Außengehäuse (4) angeordnet ist.

21. Elektrische Fritteuse (1) nach Anspruch 20, **dadurch gekennzeichnet, dass** die Fritteusenwanne (2) einen äußeren Umfangsrand (20) aufweist, dass das äußere Gehäuse (4) einen oberen Rand (41) umfasst, und dass der äußere Umfangsrand (20) auf dem oberen Rand (41) ruht.

## Claims

1. Deep fryer tank (2) made of deep-drawn metal material, having a bottom (22) and a plurality of sides (23) connected to the bottom (22) by curves (24), at least one of the sides (23) having at least one lateral stiffening indentation (8) forming a lateral recess extending in one direction, **characterised in that** said at least one of the sides (23) has at least one other lateral stiffening indentation (9) forming another lateral recess extending in another direction, and **in that** said at least one lateral stiffening indentation (8) intersects said at least one other lateral stiffening indentation (9).

2. Deep fryer tank (2) according to claim 1, **characterised in that** said at least one lateral stiffening indentation (8) and said at least one other lateral stiffening indentation (9) extend into the deep fryer tank (2).

3. Deep fryer tank (2) according to any one of claims 1 or 2, **characterised in that** said at least one lateral stiffening indentation (8) and said at least one other lateral stiffening indentation (9) extend exclusively along the sides (23).

4. Deep fryer tank (2) according to any one of claims 1 to 3, **characterised in that** said at least one lateral stiffening indentation (8) and said at least one other lateral stiffening indentation (9) are surrounded by non-indented portions of the sides (23).

5. Deep fryer tank (2) according to any one of claims 1 to 4, **characterised in that** the direction and the other direction have an angle between 60° and 120°, and preferably between 80° and 100°.

6. Deep fryer tank (2) according to any one of claims 1 to 5, **characterised in that** the direction and the other direction are perpendicular to each other.

7. Deep fryer tank (2) according to any one of claims 1 to 6, **characterised in that** the other direction extends parallel to the bottom (22).

8. Deep fryer tank (2) according to any one of claims 1 to 7, **characterised in that** the direction extends perpendicular to the bottom (22).

9. Deep fryer tank (2) according to any one of claims 1 to 8, **characterised in that** a plurality of sides (23) have said at least one lateral stiffening indentation (8) and said at least one other lateral stiffening indentation (9).

10. Deep fryer tank (2) according to any one of claims 1 to 9, **characterised in that** all of the sides (23) have said at least one lateral stiffening indentation (8) and said at least one other lateral stiffening indentation (9).

11. Deep fryer tank (2) according to any one of claims 1 to 10, **characterised in that** all of the sides (23) have two other lateral stiffening indentations (9) extending parallel to the bottom (22).

12. Deep fryer tank (2) according to any one of claims 1 to 11, **characterised in that** it is parallelepipedal.

13. Deep fryer tank (2) according to claim 12, **characterised in that** two opposite sides (23) have two lateral stiffening indentations (8) extending perpendicular to the bottom (22).

14. Deep fryer tank (2) according to claim 13, **characterised in that** one of the two other lateral stiffening indentations (9) of said two opposite sides (23) has a greater height between the lateral stiffening indentations (8) than on the outside of the lateral stiffening indentations (8).

15. Deep fryer tank (2) according to any one of claims 1 to 14, **characterised in that** the bottom (22) has at least one lower stiffening indentation (28) forming a lower recess extending in a first direction and at least one other lower stiffening indentation (29) forming another lower recess extending in a second direction, said at least one lower stiffening indentation (28) intersecting said at least one other lower stiffening indentation (29).

16. Deep fryer tank (2) according to any one of claims 1 to 15, **characterised in that** it is made of stainless steel.

17. Electric deep fryer (1) comprising a deep fryer tank (2) and an electric heating device (3), **characterised in that** the deep fryer tank (2) is in accordance with any one of claims 1 to 16.

18. Electric deep fryer (1) according to claim 17, **characterised in that** the electric heating device (3) is an electric immersion heating device configured to be immersed in a frying bath contained in the deep fryer tank (2).

19. Electric deep fryer (1) according to claim 17, **characterised in that** the electric heating device (3) is an electric induction heating device intended to heat the deep fryer tank (2) by induction.

20. Electric deep fryer (1) according to any one of claims 17 to 19, **characterised in that** it comprises an outer housing (4) having an upper opening (40) and **in that** the deep fryer tank (2) is arranged in the outer housing (4).

21. Electric deep fryer (1) according to claim 20, **characterised in that** the deep fryer tank (2) comprises an outer peripheral rim (20), and **in that** the outer housing (4) comprises an upper edge (41), and **in that** the outer peripheral rim (20) rests on the upper edge (41).
